Europäisches Patentamt

(19) European Patent Office

Office européen des brevets

(11) Publication number : **0 354 480 B1**

(12) **EUROPEAN PATENT SPECIFICATION**

(45) Date of publication of patent specification :
08.11.95 Bulletin 95/45

(51) Int. Cl.⁶ : **G09G 5/06**

(21) Application number : **89114372.9**

(22) Date of filing : **03.08.89**

(54) **Display signal generator.**

(30) Priority : **09.08.88 JP 198514/88**
**27.10.88 JP 271293/88**
**01.11.88 JP 276621/88**
**30.05.89 JP 136803/89**

(43) Date of publication of application :
**14.02.90 Bulletin 90/07**

(45) Publication of the grant of the patent :
**08.11.95 Bulletin 95/45**

(84) Designated Contracting States :
**DE FR GB NL**

(56) References cited :
**EP-A- 0 167 802**
**EP-A- 0 195 203**
**EP-A- 0 197 846**
**EP-A- 0 238 188**

(73) Proprietor : **SEIKO EPSON CORPORATION**
**4-1, Nishishinjuku 2-chome**
**Shinjuku-ku Tokyo-to (JP)**

(72) Inventor : **Tsuruoka, Shigeo c/o Seiko Epson**
**Corporation**
**3-5, Owa 3-chome**
**Suwa-shi Nagano-ken (JP)**
Inventor : **Nakamura, Jun c/o Seiko Epson**
**Corporation**
**3-5, Owa 3-chome**
**Suwa-shi Nagano-ken (JP)**
Inventor : **Nakada, Akira c/o Seiko Epson**
**Corporation**
**3-5, Owa 3-chome**
**Suwa-shi Nagano-ken (JP)**

(74) Representative : **Hoffmann, Eckart, Dipl.-Ing. et al**
**Patentanwalt**
**Bahnhofstrasse 103**
**D-82166 Gräfelfing (DE)**

EP 0 354 480 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a display signal generator, and more particularly, to a display signal generator for graphic display which is controlled by a display controller or a microprocessor in a personal computer or an engineering work station having extended graphic functions, and which generates display signals necessary for controlling a CRT display unit, a liquid crystal display unit or a plasma display unit. More specifically, the invention relates to a display signal generator having a palette (also called look-up table) used for converting digital color code data into display data.

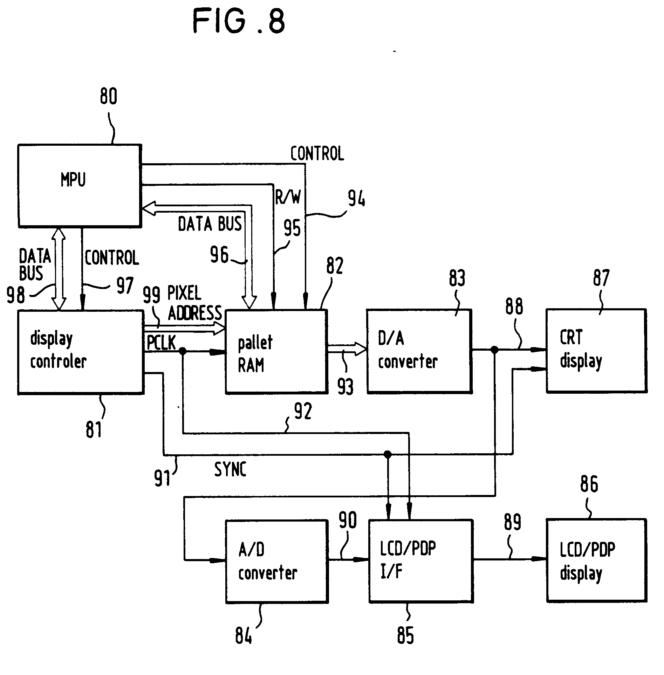

For a better understanding of the present invention reference is first made to Fig. 8 showing a conventional system for producing a CRT display, a liquid crystal display or a plasma display, equipped with a palette which is used for converting digital color code data (e.g., digital display data) with a pixel as a unit into display color data (e.g., digital RGB data). According to the conventional system of Fig. 8, a palette 82 constituted by a RAM (hereinafter referred to as palette RAM) is supplied with a clock signal (pixel clock signal) 92 which corresponds to pixel units and with display data (pixel addresses) 99 for each of the pixel units from a display controller 81. With the display data 99 as an address, display data 93 are read out from the palette RAM 82 thus converting the display data. The palette conversion data have been previously written into the palette RAM from a microprocessor 80 via a data bus 96. The display data 93 are then converted by a digital-to-analog converter (hereinafter referred to as D/A converter) 83 into signals (e.g., analog RGB signals) 88 and supplied to a CRT display unit 87 for producing a CRT display. Further, synchronizing signals 91 are supplied from the display controller 81 to the CRT display unit 87. To produce a liquid crystal display or a plasma display, on the other hand, the analog signals 88 for the CRT display from the D/A converter 83 are subjected to an analog-to-digital conversion by an analog-to-digital converter (hereinafter referred to as A/D converter) 84, and a digital signal output from A/D converter 84 is then supplied as display data 90 to a liquid crystal/plasma display interface unit 85. The interface unit 85 is supplied from the display controller 81 with the pixel clock signal 92 with one clock pulse corresponding to a pixel unit, and receives data for each of the pixels in accordance with the pixel clock signal. The synchronizing signals 91 for producing a liquid crystal/plasma display are also supplied from the display controller 81 to the interface unit 85. The interface unit 85 produces digital display signals 89 to control a liquid crystal/plasma display unit 86.

In Fig. 8, reference numeral 94 denotes a signal produced by the microprocessor 80 to control the palette 82, and 95 denotes a read-write control signal produced by the microprocessor 80 to set the palette 82 under a writing or reading condition. When the palette 82 is set to the writing condition by the signal 95, display data supplied from data bus 96 are written into the palette. When the palette is set to the reading condition by the signal 95, display data are read from palette 82 onto the data bus 96.

Reference numeral 97 denotes a control signal produced by the microprocessor 80 to control the display controller 81, and reference numeral 98 denotes a bidirectional data bus connecting microprocessor 80 and display controller 81 with each other.

According to the above-mentioned prior art, when a flat-panel display (e.g., a liquid crystal display or a plasma display) is to be produced, the output of the palette is subjected to a D/A conversion to form analog signals such as analog RGB signals necessary to produce a CRT display. These analog signals must then be converted into digital signals by using an A/D converter to obtain signals necessary for controlling a flat-panel display. The prior art apparatus, therefore, needs a high number of parts and the display system becomes bulky and expensive. Furthermore, the palette is usually constituted by a semiconductor memory such as a RAM or ROM, as shown in Fig. 8, and the conversion operation is performed by reading the data from such memory. In the case of Fig. 8, a delay time occurs between the moment when the display data (pixel address) 99 is fed to the palette 82 and the moment when the display data 93 or the analog signal 88 is obtained. The delay time stems from the reading time of the ROM or RAM. The reading time of a semiconductor memory is unstable and varies to a considerable degree depending on the manufacture, and the delay time becomes unstable. Therefore, the phase relationship between the pixel clock signal 92 or the synchronizing signals 91 produced from the display controller in synchronism with the pixel addresses and the time delayed display data becomes unstable, too, i.e. the timing tends to become deviated. In the conventional example of Fig. 8, the pixel clock signal 92 and the synchronizing signals 91 are supplied from the display controller 81 to the interface unit 85. Thereby it becomes very difficult to control the timing for receiving data on the side of the interface unit or to control the timing of the A/D converter 84. Furthermore, data are not always received correctly and troubles such as a jitter occurs on the display. Moreover, the above-mentioned phase relationship makes it very difficult to increase the operation speed of the system. Similarly, when a CRT display is to be produced, the phase relationship between the synchronizing signals 91 and the display signals 88 is unstable, giving rise to the occurrence of troubles such as jitter.

The document EP-A-0 195 203 discloses an LSI display controller capable of driving either a CRT display unit or a liquid crystal display unit. The controller includes a timing signal generating circuit that generates all timing and synchronizing signals reqired for addressing and reading a video memory and a character generator, for processing the read-out signals and for controlling the selected display unit. The controller further has a display signal generator including a color palette circuit for converting display data into color data which are either applied via D/A converters to a CRT display unit or are converted by means of a luminance calculation circuit and a grey-scale display circuit for driving an LCD display unit.

The present invention is intended to remedy the above explained drawbacks of the prior art and its object is to provide a display signal generator which is adapted to a system that produces a flat display such as a liquid crystal or a plasma display, and which is small in size, low in cost, capable of effecting the processing at a high speed and of generating display signals of high quality.

This object is achieved with a display signal generator as claimed.

According to the invention, a clock signal (pixel clock signal) corresponding to a pixel unit and display data synchronized therewith are produced via circuits formed on the same semiconductor substrate. Therefore, even with temperature changes, the outputs are delayed by the same quantity, i.e., the phase difference remains stable between those signals and a constant phase relationship is maintained at all times. Therefore, the liquid crystal or plasma interface unit receives the data correctly and easily. Since the invention does not use an A/D conversion to produce the liquid crystal or plasma display, the data can be processed at a higher speed.

Furthermore, the same delay time as the delay time until the pixel address supplied from the display controller is converted into the display data and output, is imparted to the display control signals such as horizontal and vertical synchronizing signals supplied from the same display controller. Therefore, the display data maintain a stable relation at all times relative to the display control signals and a stable display of high quality without defects such as a jitter can be obtained.

Using the display signal generator of the present invention, the system for CRT display can be adapted to the liquid crystal or plasma display without involving the problem of timings that was associated with the prior art. Therefore, the system can be easily constructed.

Ways of carrying out the invention are described in detail below with reference to drawings which show specific embodiments and in which:

| | |
|---|---|
| Figs. 1(a) and 1(b) | are block diagrams illustrating a a display signal generator suitable for driving both, a CRT display and a liquid crystal or plasma display, |
| Fig. 2 | is a block diagram illustrating a display system using a display signal generator according to a first embodiment of the present invention, |
| Fig. 3 | is a block diagram illustrating a display system using a display signal generator according to a second embodiment of the present invention, |
| Fig. 4 | is a block diagram illustrating a third embodiment of the present invention, |
| Figs. 5(a) to 5(k) | are timing charts for explaining the operation of the display signal generator of Fig. 4, |
| Fig. 6 | is a block diagram of a system for producing the CRT display or the liquid crystal display using the display signal generator according to an embodiment of the present invention, |
| Fig. 7 | is a diagram showing a concrete example of a timing generator, and |
| Fig. 8 | is a block diagram illustrating a display system which employs a conventional display signal generator. |

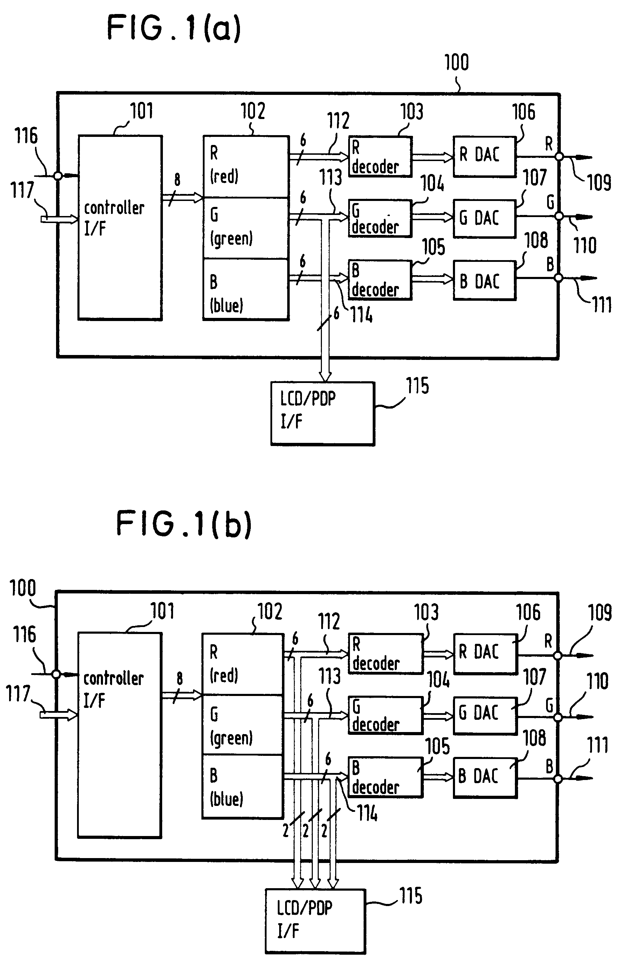

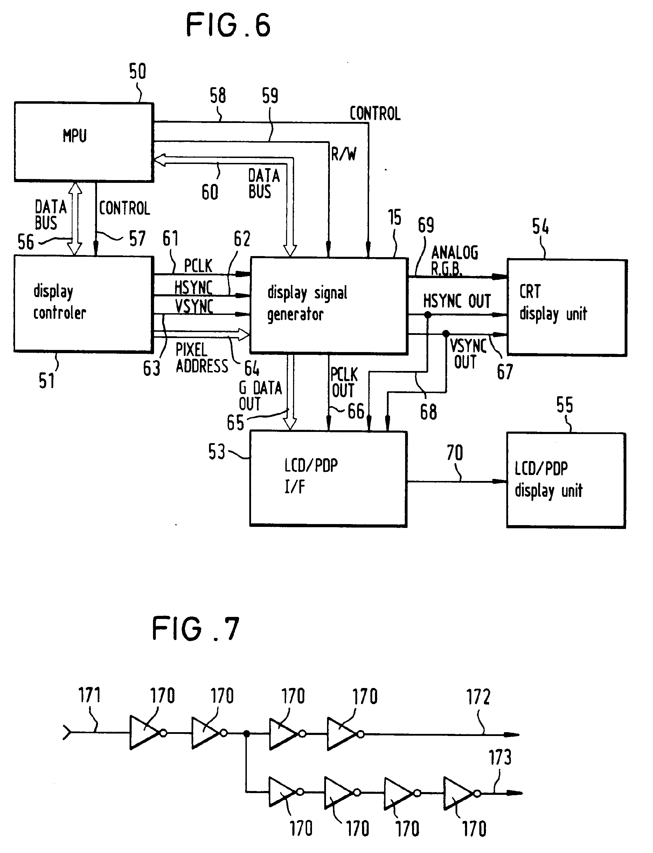

Reference is now made to Figs. 1(a) and 1(b) illustrating a a display signal generator. Reference numeral 100 denotes the display signal generator and 101 denotes an interface I/F unit for the display controller. The interface unit 101 receives a pixel clock signal (pixel clock pulses) 116 and pixel addresses 117 from the display controller. The pixel clock signal has a pixel frequency and the pixel address consists of digital display data (e.g., digital color code data) with a pixel as unit in synchronism with the pulses of the pixel clock signal. Reference numeral 102 denotes a palette constituted by a RAM which receives, as address signals, 8-bit display data (pixel address) supplied from the display controller, and outputs data stored at the designated address. Thereby the display data are converted into digital color data (112 to 114) consisting of 6 R (red) bits, 6 G (green) bits and 6 B (blue) bits. Reference numerals 103 to 105 denote decoders that subject R, G and B data from the palette to a data conversion, and 106 to 108 denote D/A converters receiving the data output from the decoders and producing R, G and B analog signals 109 to 111. A color display corresponding to a combination of the magnitudes of the R, G and B analog signals is produced by a CRT display unit. Reference numeral 115 denotes a liquid crystal or a plasma display interface unit which is served with data from the display signal generator 100, converted through the palette and which produces a liquid crystal or a plasma display. In Fig. 1(a), 6 G bits from the digital RGB data (18 bits) as converted by the palette 102 are input to the liquid crystal

3

or plasma display interface unit 115. This constitution together with the CRT display can be applied to a system that produces a monochromatic liquid crystal or plasma display with a $2^6 = 64$ gradation.

The reason that among the digital RGB data 6 G bits are input to the interface unit 115 is the following. The RGB prime color signals are converted into a brightness signal (Y) according to the following transformation formula:

$$Y = 0.3R + 0.59G + 0.11B$$

As will be obvious from the above formula, the G component has the greatest weight for the brightness signal (Y) among the R, G and B components. Therefore, when a black-and-white (monochromatic) display is to be produced by using any one of the R, G and B signals, it would be best to use the G signal to produce a natural display.

In the second embodiment shown in Fig. 1(b), the upper two bits of each of the R, G and B data output by the palette, i.e., a total of 6 bits is input to the interface unit 115. This constitution can be applied to a color liquid crystal display capable of displaying 64 colors. In addition to the above mentioned two examples, according to Figs. 1(a) and 1(b), the output to the liquid crystal or the plasma display interface may be determined depending upon the ability of the display unit. The embodiments of Figs. 1(a) and 1(b) do not illustrate the circuit that writes data into the palette RAM. The signal generator 100 can and desirably is realized in the form of a single-chip semiconductor integrated circuit formed on the same semiconductor substrate.

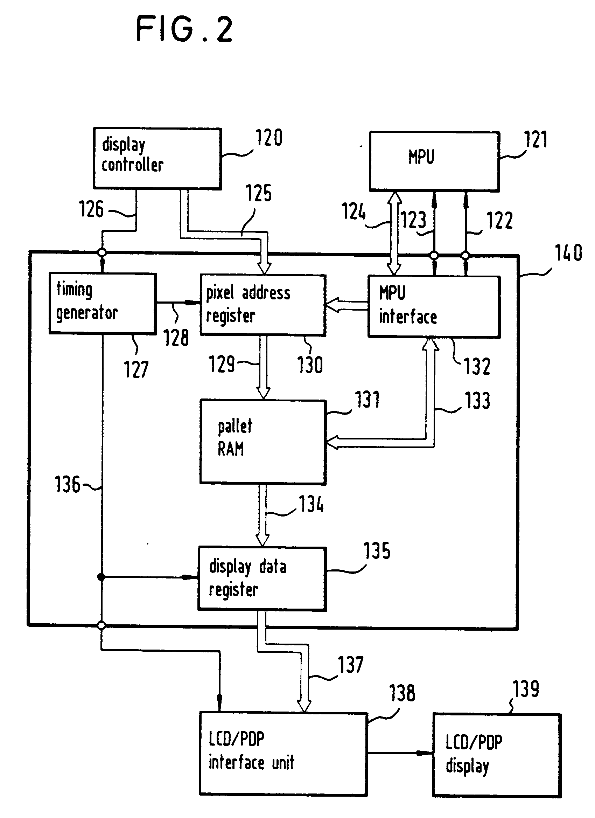

Fig. 2 illustrates a system for producing a liquid crystal or a plasma display using a display signal generator 140 according to a first embodiment of the present invention. Reference numeral 120 denotes a display controller which supplies pixel data 125 that serve as digital display data (e.g., digital color code data) with a pixel as a unit and a pixel clock signal (pixel clock pulses) 126 having a pixel frequency to the display signal generator 140. Reference numeral 131 denotes a palette constituted by a RAM, 121 denotes a microprocessor (hereinafter referred to as MPU) that controls the whole system, 124 denotes a data bus for transferring data between the MPU and the display signal generator 140, reference numeral 123 denotes a read control signal, and 122 denotes a write control signal. In response to the signals 124, 123 and 122, the MPU writes or reads conversion data into or from the palette RAM 131. Reference numeral 132 denotes an MPU interface circuit which effects control operation and interface operation for the display signal generator 140 when a request for writing or reading the palette RAM is received from the MPU. Reference numeral 133 denotes a data bus for data exchange between the MPU interface circuit and the palette RAM. The pixel clock signal 126 from the display controller 120 is input to a timing generator circuit 127 which, in response to the input pixel clock signal sends a clock signal 128 to a pixel address register 130 and a clock signal 136 to a display data register 135. A pixel address is input from the bus 125 to the pixel address register 130 and is received by the register in accordance with the clock signal 128 to send an address 129 to the palette RAM 131. The palette RAM sends data 134 stored at a location designated by the address 122 to the display data register 135. RGB color data or green color data are stored at each of the locations in the palette RAM 131. The display data register 135 receives the data 134 sent from the palette RAM in accordance with the clock signal 136. The data received by the register are output via a data bus 137. The clock signal 136 input to the display register 135 is also output from the display signal generator 140. The clock signal 136 and the display data 137 are input to the liquid crystal or plasma display interface unit 138 to drive a display unit 139. With the arrangement described above, the display data 137 are supplied to the interface unit 138 in synchronism with the clock signal 136. That is, the display data 137 is determined at a moment when the data is received by the display data register 135 in accordance with the clock signal 136. Since the clock signal 136 and the clock signal 128 are both generated by timing generator 127 which is part of the display signal generator 140 the display data 137 and the clock signal 136 are synchronized with each other at all times and their phases do not deviate.

The display signal generator 140 is realized as a single chip semiconductor integrated circuit.

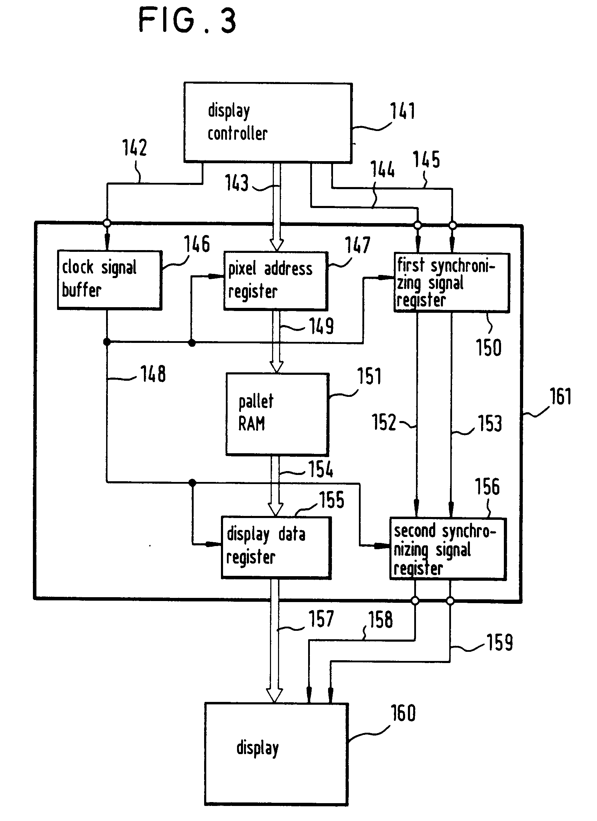

Fig.3 illustrates a system for producing a display using a display signal generator 161 according to a second embodiment of the present invention. 141 denotes a display controller which supplies to the display signal generator 161 pixel address data 143 that serve as display data (e.g., color code data), a pixel clock signal (pixel clock pulses) 142 having a pixel frequency an being synchronized with the pixel address data, a horizontal synchronizing signal 144 in synchronism with the pixel clock signal, and a vertical synchronizing signal 145 also in synchronism with the pixel clock signal. Reference numeral 151 denotes a palette constituted by a RAM, and 146 denotes a clock signal buffer circuit which, in response to the pixel clock signal 142, sends a clock signal 148 to a pixel address register 147, to a display data register 155 and to synchronizing signal registers 150 and 156. In accordance with the clock signal 148 the pixel address register 147 receives a pixel address supplied via a bus 143 and sends it as an address 149 to the palette RAM 151 which converts the pixel address into a display data stored at the designated pixel address, and sends the display data to the display data register 155 via a data bus 154. The display data register 155 receives the data sent from the palette RAM 151 in accordance with the clock signal 148. The data received by the display data register is sent through a data bus 157 to a display unit 160. The horizontal synchronizing signal 144 and the vertical synchronizing signal 145 are input to the display signal generator 161 and are then input to the first synchronizing signal register 150. The first synchronizing signal register 150 receives the data in accordance with the clock signal 148 and sends horizontal synchronizing data 152 and vertical synchronizing data 153 to the second synchronizing signal register 156. The synchronizing signal register 156 receives the data in accordance with the clock signal 148 and sends a horizontal synchronizing signal 158 and a vertical synchronizing signal 159 to the display unit 160. Owing to the above-mentioned constitution, the horizontal and vertical synchronizing signals 144 and 145 are delayed through shift registers made up of the two registers 150 and 156, and are then output as the synchronizing signals 158 and 159. The delay time from when the pixel address is supplied from the bus 143 and received by the pixel address register 147 and converted into display data, to when it is output onto the data bus 157 , is equal to the delay time from when the horizontal and vertical synchronizing signals 144 and 145 are received by the register 150 to when they are output as synchronizing signals 158 and 159. This is accomplished due to the fact that the register 147 and the register 150 are controlled by the same clock signal as are the registers 155 and 156. The embodiment of Fig.3 does not show the circuit that writes data from an MPU into the palette RAM. The display signal generator can be realized as a single chip semiconductor integrated circuit.

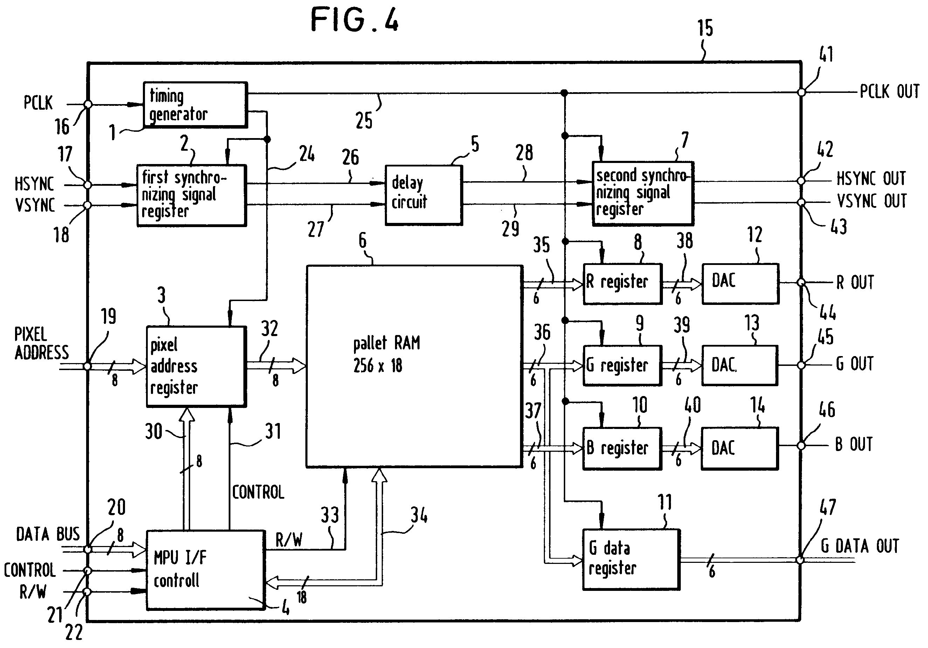

Fig.4 illustrates a display signal generator which exhibits the functions of the aforementioned embodiments 1 to 4. The display signal generator 15 has all its components formed on the same semiconductor substrate. It converts pixel address data (8 bits), i.e. digital display data (e.g., digital color code data) with a pixel as a unit into R, G and B digital color data each consisting of 6 bits, subjects the R, G and B data to a digital-to-analog conversion, outputs them a analog R, G and B signals for producing a CRT display and, at the same time, outputs G data consisting of 6 bits as digital data. Reference numeral 16 denotes a pixel clock signal input terminal, 17 denotes a horizontal synchronizing signal input terminal, 18 denotes a vertical synchronizing signal input terminal and 19 denotes a pixel address input terminal. The above mentioned signals are supplied from a display controller. Reference numeral 20 denotes a data bus, 21 a control signal input terminal and 22 a read/write control signal input terminal, these signals being supplied from the MPU that controls the system and being used when the MPU is to write or read conversion data to or from the palette RAM 6. The abovementioned input and output terminals are formed on the semiconductor substrate of the display signal generator. The pixel clock signal from input terminal 16 is input to a timing generator 1 which produces a first clock signal 24 and a second clock signal 25 lagging in phase behind the first clock signal 24. The clock signal 24 is supplied to a first synchronizing signal register 2 and to a pixel address register 3 and the clock signal 25 is supplied to a second synchronizing signal register 7, to an R register 8, an G register 9, an B register 10 and a G data register 11. The pixel address register 3 receives pixel address data from the input terminal 19 in accordance with the first clock signal 24 and supplies an address 32 to the palette RAM 6 (256 words x 18 bits RAM) which outputs the data stored in a region designated by the address 32 and sends the data of 6 R bits, 6 G bits and 6 B bits onto data buses 35, 35 and 37, respectively in parallel. The registers 8, 9 an 10 store the data from the palette RAM 6 in accordance with the second clock signal 25 and send the data to D/A converters 12, 13 and 14, respectively. The D/A converters 12, 13 and 14 subject the data of 6 R bits, 6 G bits and 6 B bits, respectively, to a D/A conversion to produce corresponding analog RGB signals from an R output terminal 44, a G output terminal 45 and a B output terminal 46, respectively. Among the RGB data read from the palette RAM, the G data 36 consisting of 6 bits is further supplied to the G data register 11 which receives the data in accordance with the second clock signal 25 and outputs it as data of 6 bits from a digital G data output terminal 47. The first synchronizing signal register 2 stores the horizontal and vertical synchronizing signals from the input terminals 17 and 18 in accordance with the first clock signal 24. The synchronizing signals received by the register 2 are input to a delay circuit 5 which delays the synchronizing signals 26, 27 that are output just when the synchronizing signals 17, 18 are received by the register 2 in order that the shift register consisting of the first synchronizing signal register 2 and the second synchronizing signal register 7 will not be erroneously operated due to a clock skew. Without the delay circuit 5 the synchronizing signal stored in the register 2 in accordance with the clock signal 24 is readily latched by the register 7 in accordance with the clock signal 25, i.e. the synchronizing signals tend to be produced by one pixel clock pulse in advance. Synchronizing signals 28 and 29 output from the delay circuit 5 are input to the second synchronizing signal register 7 which receives the synchronizing signals in accordance with the second clock signal 25 and outputs them to a horizontal synchronizing signal output terminal 42 and a vertical synchronizing signal output terminal 43, respectively. The second clock signal 25 is output from a pixel clock signal output terminal 41. Reference numeral 4 denotes an MPU interface circuit which writes or reads the conversion data to or from the palette RAM depending upon a control signal from the control signal input terminal 21 and a read/write control signal from the read/write control signal input terminal 22. The interface circuit 4 sends to the pixel address register 3 an 8-bit write address 30 which is to be sent to the palette RAM 6 and a control signal 31, sends a read/write control signal 33

EP 0 354 480 B1

to the palette RAM 6 and reads or writes conversion data 34 out of or into the palette RAM 6. The interface circuit 4 is served with address data and conversion data from the display controller via the data bus 20. The control signal from the control signal input terminal 21 switches the data input from the data bus 20 to the address or to the conversion data. When the read/write control signal from the read/write control signal input terminal 22 indicates writing and the control signal indicates an address, the address from the data bus 20 is sent to the address register 3 via the bus 30. At this moment, the control signal 31 switches the data received by the register 3 from bus 19 to bus 30. Next, when the control signal 21 indicates the conversion data, the conversion data from the bus 20 is sent to palette RAM 6 via bus 34. Since the read/write control signal 33 indicates writing, the conversion data that is input through the bus 20 is written into a region designated by the address that has previously been input via the bus 20 and received by the register 3. When the read/write control signal from the terminal 22 indicates the reading, the conversion data is read from the palette RAM onto the bus 20 depending upon the address input from the bus 20.

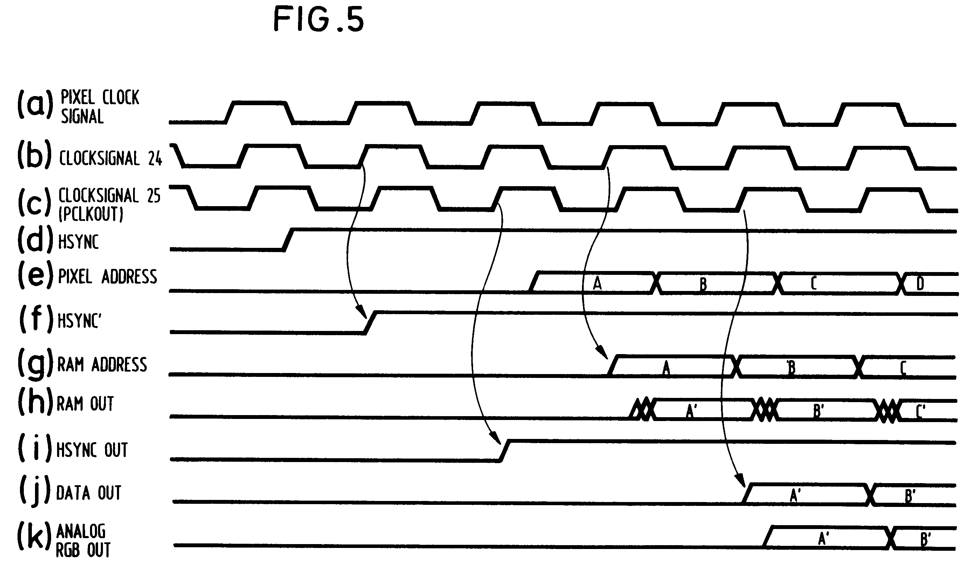

Fig.5 is a timing chart which illustrates the operation of the display signal generator of Fig.4, and wherein (a) shows the pixel clock signal input from the terminal 16 of Fig.4, (b) shows the first clock signal 24 of Fig.4 and (c) shows the second clock signal 25 of Fig.4. The diagram (d) shows the horizontal synchronizing signal input from the terminal 17 of Fig.4, (e) shows pixel address data input from the terminal 19 of Fig.4, (f) shows a signal 26 in Fig.4 which is a horizontal synchronizing signal stored in the first synchronizing signal register 2 of Fig.4 in accordance with the clock signal of (b), and the diagram (g) shows signals 32 of Fig.4 which are pixel address data stored in the pixel address register 3 in accordance with the clock signal of (b) and which serve as the address for the palette RAM 6. The diagram (h) shows signals 35, 36, 37 in Fig.4 which are the data output from the palette RAM. The diagram (i) shows the horizontal synchronizing signal output from terminal 42 in Fig.4, which is stored in the register 7 of Fig.4 in accordance with the clock signal of (c). The diagram (j) shows digital G data output from terminal 47 in Fig.4 or digital RGB data output onto the buses 38, 39 and 40, which are stored in the registers 11, 8, 9 and 10, respectively of Fig.4 in accordance with the clock signal of (c). The diagram (k) shows analog RGB signals output from D/A converters 12, 13 and 14 to the output terminals 44, 45 and 46 in Fig.4.

Fig.6 is a block diagram of a system that produces a CRT display and a liquid crystal display using a display signal generator according to the embodiment of the invention shown in Fig.4. Reference numeral 15 denotes the display signal generator described above and realized as a semiconductor integrated circuit of a single chip. 50 denotes an MPU which controls the whole system and which so designates to the display signal generator 15 the data to be converted by the palette RAM. Reference numeral 51 denotes a display controller which under the control of the MPU supplies a pixel clock signal 61, a horizontal synchronizing signal 62, a vertical synchronizing signal 63 and pixel address data 64 to the display signal generator 15. The display signal generator 15 supplies to a CRT display unit 54 analog RGB signals 69 as well as horizontal and vertical synchronizing signals 68 and 67 which have been delayed in the display signal generator. Further, the display signal generator supplies to a liquid crystal display or plasma display interface unit 53 an output pixel clock signal 66, digital G data 65 in synchronism with the output pixel clock signal and horizontal and vertical synchronizing signals 68 and 67. The liquid crystal display or plasma display interface unit drives a liquid crystal or plasma display unit 55. In Fig.6, the reference numerals 56, 57, 58, 59 and 60 correspond to the reference numerals 98, 97, 94, 95 and 96, respectively of Fig.8.

In Figs.4 and 6, the liquid crystal or plasma display is a gradation display which displays for each of the pixels the shading depending upon the values of 6-bit G color data. Without being limited to this according to the present invention, however, the upper few bits of the RGB color data may be output as shown in Fig.1(b). In this case, the liquid crystal display produces a color display for each of the pixels. The bit number of the color data output from the display signal generator is not limited to the numbers used in the explained embodiments. The greater the number of bits the greater the number of gradations or the greater the number of colors that can be displayed.

Fig.7 illustrates a concrete example of the timing generator designated at 127 in Fig.2 or designated at 1 in Fig.4. The reference numeral 170 denotes an inverter. As shown in Fig.7 an inverter 170 receives a pixel clock signal 171 from an external unit. The pixel clock signal 171 corresponds to the pulse signal shown 5(a). Reference numeral 172 denotes a clock signal which is designated at 128 in Fig.2 and 24 in Fig.4 and shown in Fig.5 (b). Reference numeral 173 denotes a clock signal which is designated at 136 in Fig.2 and at 25 in Fig.4 and which is shown in Fig.5(c). As shown in Fig.7, the input pixel clock signal 171 passes four inverters 170 to be output as the clock signal 172, and passes six inverters 170 to be output as the clock signal 173, thus imposing a phase delay on clock signal 173 with respect to clock signal 172.

In the embodiments of the invention, the synchronizing signals are output from the device. To apply the invention to a CRT display device that needs blanking signals, it is also possible to send the blanking signals to the CRT display after they have been delayed in the same way as the synchronizing signals.

6

Furthermore, in the embodiments of the invention the diagrams illustrate that both a CRT display and a liquid crystal or plasma display are connected to the display signal generator. In practice, however, any one of the CRT display and flat-panel display is connected to exhibit its display function. In the embodiments of the invention, furthermore, each register may use register that consists of two registers in series input the clock.

As described above, according to one aspect the present invention provides a display signal generator which converts digital display data with a pixel as a unit into a digital display signal for a flat-panel display, comprising clock generator means (127; 146) which generates a first pixel clock signal having a pixel frequency, converter means (131; 151) which converts said display data into said display signal, and first storage means (135; 155) which stores said display signal output from said converter means in accordance with said first pixel clock signal, wherein said first pixel clock signal and said display signal stored in said first storage means are sent to a flat-panel display device.

Specific embodiments and developments of this display signal generator are characterized as follows:

[1] The signal generator wherein said clock generator means (127) generates a second pixel clock signal having the pixel frequency, and which is further provided with a second storage means (130) which stores said display data in accordance with said second pixel clock signal and sends it to said converter means (131).

[2] The signal generator according to [1], wherein said converter means (131, 147) includes memory means with stores said display signal consisting of color data at a location addressed by said display data.

[3] The signal generator according to [2], wherein said first storage means (135; 155) stores green color data output from said converter means (131; 151).

[4] The signal generator according to [3], wherein said flat-panel display device produces a gradation display by being supplied with said green color data of plural bits that are stored in said first storage means (135; 155).

[5] The signal generator according to [2] wherein said color data stored at each location of said memory means consists of red, green and blue color data each being made up of plural bits, and said first storage means stores a predetermined number of bits of each of said red, green and blue color data counted from the most significant bit.

[6] The signal generator according to [5], wherein said flat-panel display device is supplied with said red, green and blue color data stored in said first storage means (135;155) for performing a color display at each pixel corresponding to the red, green and blue color data.

[7] The signal generator according to [4], wherein said flat-panel display device is a liquid crystal display device.

[8] The signal generator according to [4] wherein said flat-panel display device is a plasma display device.

[9] The signal generator according to [1] wherein said clock generator means (127; 146), said converter means (131; 151) and said first and second storage means (135, 130; 155, 147) are formed on the same semiconductor substrate.

[10] The signal generator according to [1] wherein the phase of said first pixel clock signal lags behind that of the second pixel clock signal.

[11] The signal generator according to [9] wherein said display data stored in said second storage means (130; 147) and an original clock signal that serves as source of said pixel clock signal generated by said clock generator means (127; 146) are supplied from a unit outside of the integrated circuit formed on said semiconductor substrate.

According to another aspect, the present invention provides a display signal generator which converts digital display data with a pixel as a unit into a display signal for display on a display device, comprising clock generator means (1) for generating a first pixel clock signal (25) having a pixel frequency; converter means (6) for converting said display data into said display signal; first storage means (8-11) for storing said display signal output from said converter means (6) in accordance with said first pixel clock signal (25), and second storage means (7) for storing synchronizing signals and/or blanking signals for the display in accordance with said first pixel clock signal (25), wherein said display signal stored in said first storage means and said synchronizing or blanking signals stored in said second storage means are sent to the display device.

Specific embodiments and developments of this display signal generator are characterized as follows:

{1} The signal generator wherein said clock signal generator means (1) generates a second pixel clock signal (24) having the pixel frequency and wherein is further provided a third storage means (3) which stores said display data in accordance with said second pixel clock signal (24) and sends it to said converter means (6) and fourth storage means (2) which stores the synchronizing signals and/or blanking signals for said display data supplied to said third storage means, in accordance with said second pixel clock signal and sends it to said second storage means.

{2} The signal generator according to {1}, further including delay means (5) which delays the synchronizing or blanking signals stored in said fourth storage means (2) and sends it to said second storage means (7).

{3} The signal generator according to {1}, wherein said converter means (6) includes memory means which stores said display signal consisting of color data at a location addressed by said display data, and said first storage means (8-11) stores said color data.

{4} The signal generator according to {3}, wherein said first storage means includes fifth storage means (8-10) which stores red, green and blue color data output from said converter means (6) in accordance with said first pixel clock signal (25), and wherein a digital-to-analog converter (12-14) is provided which generates an analog signal to be color-displayed on a CRT display based on said color data stored by said fifth storage means, said analog signal and said synchronizing signals being supplied as image signal to a CRT display device.

{5} The signal generator according to {3}, wherein said first storage means includes a sixth storage means (11) which stores at least part of said color data output from said converter means (6) in accordance with said first pixel clock signal (25), a flat-panel display device being supplied with said synchronizing signal, said first pixel clock signal and said color data stored by said sixth storage means.

{6} The signal generator according to {1}, wherein said clock signal generator means (1) said converter means (6) and said first, second, third and fourth storage means (8-11, 7, 3, 2) are formed on the same semiconductor substrate, said clock signal generator means forming said first and second pixel clock signals (25, 24) based on an original clock signal supplied for a unit outside of said semiconductor substrate, said third storage means (3) stores said display data supplied from a unit outside of said semiconductor substrate in synchronism with said original clock signal, and said fourth storage means (2) stores a synchronizing signal supplied from a unit outside of said semiconductor substrate in synchronism with said original clock signal.

## Claims

1. A display signal generator formed as an integrated circuit (15; 140) on one semiconductor substrate, comprising

   first input means (19) for receiving from a unit external to the intergrated circuit digital display data with a pixel as a unit,

   second input means (16) for receiving from said external unit a first pixel clock signal having a pixel frequency and being synchronized with said digital display data,

   converter means (6; 131; 151) for converting said display data into digital converted data, and

   clock generator means (1; 127; 146) for generating a second pixel clock signal (25; 136; 148) having the pixel frequency, in response to said first pixel clock signal,

   first storage means (8-11; 135; 155) for storing said digital converted data output from said converter means (6; 131; 151) in accordance with said second pixel clock signal (25; 136; 148),

   first output means (41) for outputting said second pixel clock signal (25; 136; 148), and

   second output means (47) for outputting at least part of said digital converted data stored in said first storage means (8-11; 135; 151),

   said first and second output means providing signals suitable for driving a flat panel display unit.

2. The generator according to claim 1, further comprising

   third input means (17, 18) for receiving from said external unit display sychronizing and/or blanking signals,

   second storage means (7; 156) for storing said display sychronizing and/or blanking signals in accordance with said second pixel clock signal (25; 148), and

   third output means (42, 43) for outputting said display sychronizing and/or blanking signals stored in said second storage means (7; 156).

3. The signal generator according to claim 1, wherein said clock generator means (1; 127) generates a third pixel clock signal (24; 128) having the pixel frequency, and which is further provided with a third storage means (3, 130) which stores said display data in accordance with said third pixel clock signal and applies it to said converter means (6; 131).

4. The signal generator according to claims 2 and 3, further comprising fourth storage means (2; 150) for storing said display sychronizing and/or blanking signals received from said third input means (17, 18) in accordance with said third pixel clock signal (25; 148) and for applying the stored display sychronizing and/or blanking signals to said second storage means (7; 156).

5. The signal generator according to claim 4, further including delay means (5) provided between said fourth (2; 150) and said second storage means (7; 156).

6. The signal generator according to claim 3, 4 or 5, wherein the phase of said second pixel clock signal lags behind that of the third pixel clock signal.

7. The signal generator according to any one of the preceding claims, wherein said converter means (6; 131; 151) includes memory means which stores said digital converted data as color data at a location addressed by said display data.

8. The signal generator according to claim 7, wherein said first storage means (11; 135; 160) stores green color data output from said converter means (6; 131; 151).

9. The signal generator according to claim 8, wherein said flat-panel display device produces a gradation display by being supplied with said green color data of plural bits that are stored in said first storage means (11; 135; 155).

10. The signal generator according to claim 7, wherein said color data stored at each location of said memory means consists of red, green and blue color data each being made up of plural bits, and said first storage means stores a predetermined number of bits of each of said red, green and blue color data counted from the most significant bit.

11. The signal generator according to claim 10, wherein said flat-panel display device is supplied with said red, green and blue color data stored in said first storage means for performing a color display at each pixel corresponding to the red, green and blue color data.

12. The signal generator according to claim 9, wherein said flat-panel display device is a liquid crystal display device.

13. The signal generator according to claim 9, wherein said flat-panel display device is a plasma display device.

14. The signal generator according to claim 7, wherein said first storage means (8-11) includes fifth storage means (8-10) which stores red, green and blue color data output from said converter means (6) in accordance with said second pixel clock signal (25), and the signal generator further comprises digital-to-analog converter means (12-14) for converting said red, green and blue color data stored in said fifth storage means into analog signals, and fourth output means (44-46) for outputting said analog signals to be color-displayed on a CRT display.

## Patentansprüche

1. Als integrierte Schaltung (15; 140) auf einem einzigen Halbleitersubstrat gebildeter Anzeigesignalgenerator mit
einer ersten Eingabeeinrichtung (19) zum Empfang digitaler Anzeigedaten mit einem Pixel als Einheit von einer Einheit außerhalb der integrierten Schaltung;
einer zweiten Eingabeeinrichtung (16) zum Empfang eines ersten Pixeltaktsignals, welches eine Pixelfrequenz hat und mit den digitalen Anzeigedaten sychronisiert ist, von der externen Einheit;
einer Umsetzereinrichtung (6; 131; 151) zum Umwandeln der Anzeigedaten in digitale, umgesetzte Daten, und
einer Taktgeneratoreinrichtung (1; 127; 146) zum Erzeugen eines zweiten Pixeltaktsignals (25; 136; 148), welches die Pixelfrequenz hat, als Antwort auf das erste Pixeltaktsignal;
einer ersten Speichereinrichtung (8-11; 135; 155) zum Speichern der von der Umsetzereinrichtung (6; 131; 151) umgewandelten digitalen Daten entsprechend dem zweiten Pixeltaktsignal (25; 136; 148);
einer ersten Ausgabeeinrichtung (41) zum Ausgeben des zweiten Pixeltaktsignals (25; 136; 148) und

einer zweiten Ausgabeeinrichtung (47) zum Ausgeben mindestens eines Teils der in der ersten Speichereinrichtung (8-11; 135; 151) gespeicherten, digitalen, umgewandelten Daten,

wobei die erste und zweite Ausgabeeinrichtung Signale bereitstellen, die zum Ansteuern einer Flachschirmanzeigeeinheit geeignet sind.

2. Generator nach Anspruch 1, ferner mit

einer dritten Eingabeeinrichtung (17, 18) zum Empfang von Anzeigesynchronisier- und/oder Austastsignalen von der externen Einheit;

einer zweiten Speichereinrichtung (7; 156) zum Speichern der Anzeigesynchronisier- und/oder Austastsignale entsprechend dem zweiten Pixeltaktsignal (25; 148), und

einer dritten Ausgabeeinrichtung (42, 43) zum Ausgeben der Anzeigesynchronisier- und/oder Austastsignale, die in der zweiten Speichereinrichtung (7; 156) gespeichert sind.

3. Signalgenerator nach Anspruch 1, bei dem die Taktgeneratoreinrichtung (1; 127) ein drittes Pixeltaktsignal (24; 128) erzeugt, das die Pixelfrequenz hat, und der ferner mit einer dritten Speichereinrichtung (3, 130) versehen ist, welche die Anzeigedaten entsprechend dem dritten Pixeltaktsignal speichert und an die Umsetzereinrichtung (6; 131) anlegt.

4. Signalgenerator nach Anspruch 2 und 3, ferner mit einer vierten Speichereinrichtung (2; 150) zum Speichern der von der dritten Eingabeeinrichtung (17, 18) empfangenen Anzeigesynchronisier- und/oder Austastsignale entsprechend dem dritten Pixeltaktsignal (25; 148) und zum Anlegen der gespeicherten Anzeigesynchronisier- und/oder Austastsignale an die zweite Speichereinrichtung (7; 156).

5. Signalgenerator nach Anspruch 4, ferner mit einer Verzögerungseinrichtung (5), die zwischen der vierten (2; 150) und der zweiten Speichereinrichtung (7; 156) vorgesehen ist.

6. Signalgenerator nach Anspruch 3, 4 oder 5, bei dem die Phase des zweiten Pixeltaktsignals hinter der des dritten Pixeltaktsignals nacheilt.

7. Signalgenerator nach einem der vorhergehenden Ansprüche, bei dem die Umsetzereinrichtung (6; 131; 151) eine Speichereinrichtung umfaßt, welche die digitalen, umgewandelten Daten als Farbdaten an einer von den Anzeigedaten adressierten Stelle speichert.

8. Signalgenerator nach Anspruch 7, bei dem die erste Speichereinrichtung (11; 135; 160) die von der Umsetzereinrichtung (6; 131; 151) ausgegebenen Grünfarbdaten speichert.

9. Signalgenerator nach Anspruch 8, bei dem die Flachschirmanzeigevorrichtung, indem ihr die Grünfarbdaten mehrerer Bits geliefert werden, die in der ersten Speichereinrichtung (11; 135; 155) gespeichert sind, eine Gradationsanzeige erzeugt.

10. Signalgenerator nach Anspruch 7, bei dem die an jeder Stelle der Speichereinrichtung gespeicherten Farbdaten aus roten, grünen und blauen Farbdaten besteht, die jeweils aus mehreren Bits zusammengesetzt sind, und die erste Speichereinrichtung eine vorherbestimmte Anzahl Bits jeder der roten, grünen und blauen Farbdaten, gezählt ab dem höchstwertigen Bit, speichert.

11. Signalgenerator nach Anspruch 10, bei dem die Flachschirmanzeigevorrichtung mit den in der ersten Speichereinrichtung gespeicherten roten, grünen und blauen Farbdaten versorgt wird, um an jedem Bildelement entsprechend den roten, grünen und blauen Farbdaten eine Farbanzeige vorzunehmen.

12. Signalgenerator nach Anspruch 9, bei dem die Flachschirmanzeigevorichtung eine Flüssigkristallanzeigevorrichtung ist.

13. Signalgenerator nach Anspruch 9, bei dem die Flachschirmanzeigevorrichtung eine Plasmaanzeigevorrichtung ist.

14. Signalgenerator nach Anspruch 7, bei dem die erste Speichereinrichtung (8-11) eine fünfte Speichereinrichtung (8-10) umfaßt, die von der Umsetzereinrichtung (6) ausgegebene rote, grüne und blaue Farbdaten entsprechend dem zweiten Pixeltaktsignal (25) speichert, und der Signalgenerator ferner Digital-Analog-Umsetzereinrichtungen (12-14) aufweist, um die in der fünften Speichereinrichtung gespeicherten roten, grünen und blauen Farbdaten in analoge Signale umzuwandeln, sowie vierte Ausgabeeinrichtungen (44-46), zum Ausgeben der auf einer Bildschirmanzeige farbig darzustellenden Analogsignale.

## Revendications

1. Générateur de signaux d'affichage réalisé sous la forme d'un circuit intégré (15; 140) sur un substrat semiconducteur, comprenant :
   un premier moyen d'entrée (19) pour recevoir d'une unité extérieure au circuit intégré, des données d'affichage numériques, le pixel étant pris comme unité,
   un second moyen d'entrée (16) pour recevoir de l'unité externe un premier signal d'horloge de pixel ayant une fréquence de pixel et étant synchronisé avec les données d'affichage numériques,
   un moyen convertisseur (6; 131; 151) pour convertir les données d'affichage en données converties numériques, et
   un moyen générateur d'horloge (1; 127; 146) pour produire un second signal d'horloge de pixel (25; 136; 148) à la fréquence de pixel, en réponse au premier signal d'horloge de pixel,
   un premier moyen de stockage (8-11; 135; 155) pour stocker les données numériques converties fournies par le moyen convertisseur (6; 131; 151) en conformité avec le second signal d'horloge de pixel (25; 136; 148),
   un premier moyen de sortie (41) pour fournir en sortie le second signal d'horloge de pixel (25; 136; 148), et
   un second moyen de sortie (47) pour fournir en sortie au moins une partie des données converties numériques stockées dans le premier moyen de stockage (8-11; 135; 151), les premier et second moyens de sortie fournissant des signaux permettant d'attaquer une unité d'affichage à écran plat.

2. Générateur selon la revendication 1, comprenant en outre :
   un troisième moyen d'entrée (17, 18) pour recevoir de cette unité externe des signaux de suppression et/ou de synchronisation d'affichage.
   un second moyen de stockage (7; 156) pour stocker les signaux de suppression et/ou de synchronisation d'affichage en conformité avec le second signal d'horloge de pixel (25; 148) et
   un troisième moyen de sortie (42, 43) pour fournir en sortie les signaux de suppression et/ou de synchronisation d'affichage dans le second moyen de stockage (7; 156).

3. Générateur de signaux selon la revendication 1, dans lequel le moyen générateur d'horloge (1; 127) produit un troisième signal d'horloge de pixel (24; 128) ayant la fréquence de pixel, qui est en outre muni d'un troisième moyen de stockage (3, 130) qui stocke les données d'affichage en conformité avec le troisième signal d'horloge de pixel et les applique au moyen convertisseur (6; 131).

4. Générateur de signaux selon les revendications 2 et 3, comprenant en outre un quatrième moyen de stockage (2; 150) pour stocker les signaux de suppression et/ou de synchronisation d'affichage reçus du troisième moyen d'entrée (17, 18) en conformité avec le troisième signal d'horloge de pixel (25; 148) et pour fournir les signaux de suppression et/ou de synchronisation d'affichage stockés au second moyen de stockage (7; 156).

5. Générateur de signaux selon la revendication 4, comportant en outre un moyen à retard (5) disposé entre les quatrième (2; 150) et second (7; 156) moyens de stockage.

6. Générateur de signaux selon la revendication 3, 4 ou 5, dans lequel la phase du second signal d'horloge de pixel est retardée par rapport à celle du troisième signal d'horloge de pixel.

7. Générateur de signaux selon l'une quelconque des revendications précédentes, dans lequel le moyen convertisseur (6; 131; 151) comporte un moyen à mémoire qui stocke les données numériques converties en tant que données de couleurs à un emplacement dont l'adresse est définie par les données d'affichage.

8. Générateur de signaux selon la revendication 7, dans lequel le premier moyen de stockage (11; 135; 160) stocke des données de couleur verte fournies en sortie par le moyen convertisseur (6; 131; 151).

9. Générateur de signaux selon la revendication 8, dans lequel le dispositif d'affichage à écran plat produit un affichage à gradations multiples par le fait qu'il reçoit les données de couleur verte à plusieurs bits qui sont stockées dans le premier moyen de stockage (11; 135; 155).

10. Générateur de signaux selon la revendication 7, dans lequel les données de couleurs stockées à chaque emplacement du moyen à mémoire sont constituées de données de couleurs rouge, verte et bleue comportant chacune plusieurs bits, et le premier moyen de stockage stocke un nombre prédéterminé de bits de chacune des données de couleurs rouge, verte et bleue, comptés à partir du bit de poids le plus fort.

11. Générateur de signaux selon la revendication 10, dans lequel le dispositif d'affichage à écran plat reçoit les données de couleurs rouge, verte et bleue dans le premier moyen de stockage pour effectuer un affichage en couleur sur chaque pixel correspondant aux données de couleurs rouge, verte et bleue.

12. Générateur de signaux selon la revendication 9, dans lequel le dispositif d'affichage à écran plat est un dispositif d'affichage à cristaux liquides.

13. Générateur de signaux selon la revendication 9, dans lequel le dispositif d'affichage à écran plat est un dispositif d'affichage à plasma.

14. Générateur de signaux selon la revendication 7, dans lequel le premier moyen de stockage (8-11) comporte un cinquième moyen de stockage (8-10) qui stocke des données de couleurs rouge, verte et bleue fournies en sortie par le moyen convertisseur (6) en conformité avec le second signal d'horloge de pixel (25), et le générateur de signaux comprend en outre un moyen de conversion numérique-analogique (12-14) pour convertir les données de couleurs rouge, verte et bleues stockées dans le cinquième moyen de stockage, en signaux analogiques, et un quatrième moyen de sortie (44-46) pour fournir en sortie les signaux analogiques afin qu'ils soient affichés en couleurs sur un afficheur à tube à rayons cathodiques.

# FIG.1(a)

# FIG.1(b)

# FIG.2

# FIG . 3

FIG.4

FIG.5

(a) PIXEL CLOCK SIGNAL

(b) CLOCKSIGNAL 24

(c) CLOCKSIGNAL 25 (PCLKOUT)

(d) HSYNC

(e) PIXEL ADDRESS

(f) HSYNC'

(g) RAM ADDRESS

(h) RAM OUT

(i) HSYNC OUT

(j) DATA OUT

(k) ANALOG RGB OUT

# FIG.6

# FIG.7

# FIG .8